(19) Europäisches Patentamt
European Patent Office
Office européen des brevets

(11) Publication number: 0 323 142 B1

# (12) EUROPEAN PATENT SPECIFICATION

(45) Date of publication of patent specification: **08.09.93**

(51) Int. Cl.[5]: **C08L 71/00**, C08L 79/08, C08L 83/06, H01B 3/30

(21) Application number: **88312187.3**

(22) Date of filing: **22.12.88**

The file contains technical information submitted after the application was filed and not included in this specification

## (54) Ternary blends as wire insulations.

(30) Priority: **24.12.87 GB 8730130**
**20.04.88 GB 8809274**

(43) Date of publication of application:
**05.07.89 Bulletin 89/27**

(45) Publication of the grant of the patent:
**08.09.93 Bulletin 93/36**

(84) Designated Contracting States:
**BE DE ES FR GB IT NL**

(56) References cited:
**EP-A- 0 095 174**
**EP-A- 0 254 488**
**DE-A- 3 813 321**
**EP-A- 0 163 464**
**EP-A- 0 266 595**
**US-A- 4 250 279**

(73) Proprietor: **PIRELLI GENERAL plc**
**40 Chancery Lane**
**London WC2A 1JH(GB)**

(72) Inventor: **Alesbury, Colin Kevin**
**3 Forest Gate Mapley**
**Southampton Hampshire S04 1GW(GB)**
Inventor: **Murphy, Richard John, Dr.**
**26 Saker Street**
**Liverpool(GB)**

(74) Representative: **West, Alan Harry et al**
**R.G.C. Jenkins & Co. 26 Caxton Street**
**London SW1H 0RJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 323 142 B1

## Description

This invention relates to blends of a poly(arylene ether ketone) such as a polyether ether ketone (PEEK), a polyether ketone (PEK) or a polyether ketone ketone (PEKK) with a polyetherimide (PEI) and a silicone-polyimide copolymer (S-PI). Such blends form flexible flame retardant materials which may be used for the manufacture of moulded articles such as a thin-wall wire insulation or jacket.

Polyether ether ketones are currently used over irradiated polyphenylene oxide (for example, "Noryl") to form a dual wall wire insulation. This combination of materials passes required specification tests (for example, U.K. Ministry of Defence, Defence Standard 61-12, Part 18/2) but enhanced fire retardancy and stress crazing properties would be beneficial for some applications. Also, PEEK materials are relatively inflexible and quite expensive.

Silicon-polyimide materials, such as "Siltem", are not only more flexible and less costly than PEEK but also more flame retardant and it would be expected that a blend of PEEK and S-PI would yield improved properties over PEEK alone. However, this is not so; it would seem that the two materials are insufficiently mutually compatible so that two phases remain after thorough blending resulting in separation and inhomogeneity upon extrusion and fibrillation and poor flexibility of the extruded product.

Polyetherimides are known to blend quite well with PEEK materials but suffer from the disadvantage of being subject to stress crazing. For this reason alone, such blends are totally unsuitable as wire insulation.

In a similar manner, PEI and S-PI form homogeneous blends. EP-A-0 266 595 for example describes flame resistant polymer blends containing a polyetherimide and an impact strength - enhancing amount of a siloxane - polyetherimide copolymer which are said to have high impact strengths, good blow moldability and injection moldability, amenability to thermoforming and very low flammability and to be particularly suited to the manufacture of aircraft cabin interior components. However, as illustrated below, such blends also suffer from stress crazing and so, too, are unsuitable as wire insulation.

Surprisingly, it has now been found that PEEK or PEK together with PEI and S-PI form homogeneous blends having good solvent resistance (i.e. resistance to stress crazing) and excellent flame retardancy properties.

According to the invention, there is provided a blend of a poly (arylene ether ketone), for example a polyether ketone, a polyether ether ketone or a polyether ketone ketone, together with a polyetherimide and a silicone-polyimide copolymer.

The poly(arylene ether ketone) will contain units of the general formulae

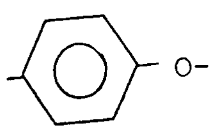 (I) and 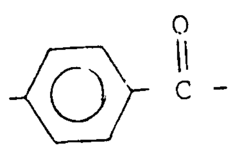 (II·)

which may carry one or more substitutents on the arylene rings.

The polyether ketone is suitably one containing repeating units of the general formula

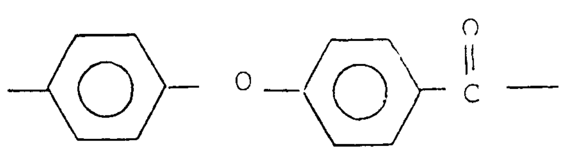 (III)

the polyether ether ketone suitably contains repeating units of the general formula

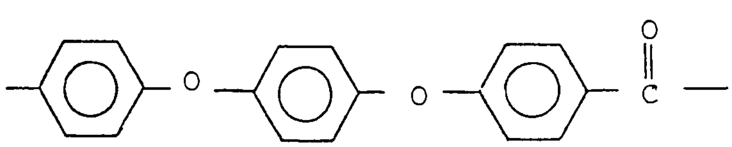 (IV)

and the polyether ketone ketone suitably contains repeating units of the general formula

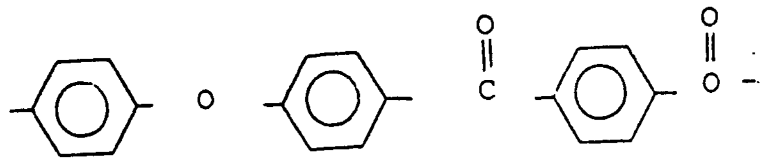

(V)

in which in all cases (III) to (V) the phenylene groups may carry one or more substituents.

The polyetherimide will generally contain repeating units of the general formula

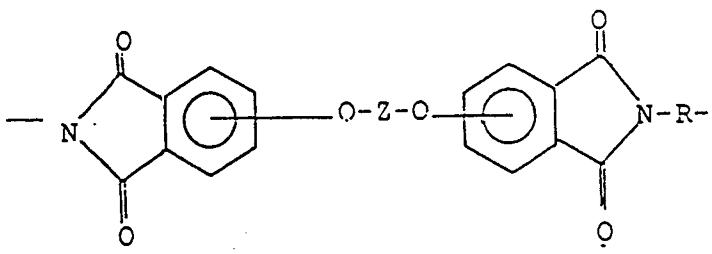

(VI)

in which Z and R are organic groups, for example in which R is

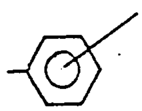 , 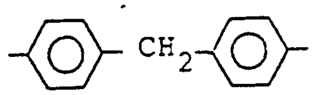 or 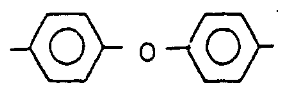

Z is

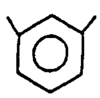 , 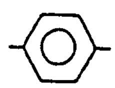 , 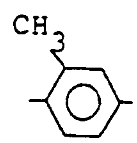 , 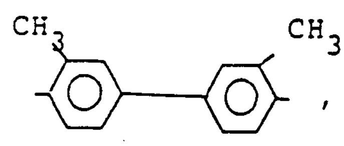 ,

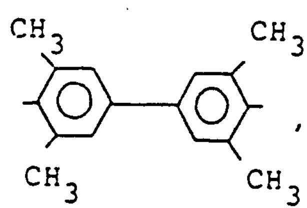 , 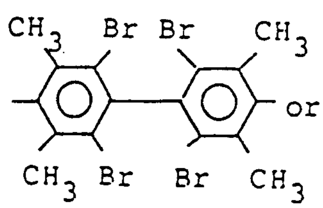 or 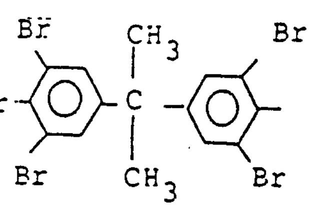

or a group of the formula

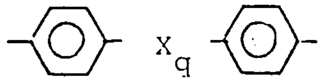

in which X is $C_yH_{2y}$,

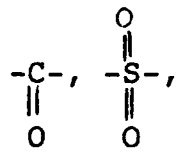

-O- or -S-, q is 0 or 1 and y is an integer from 1 to 5 and the bonds of the -O-Z-O- group are in the 3,3′; 3,4′; 4,3′ or the 4,4′ position.

However, the polyetherimide may also contain units of the formula

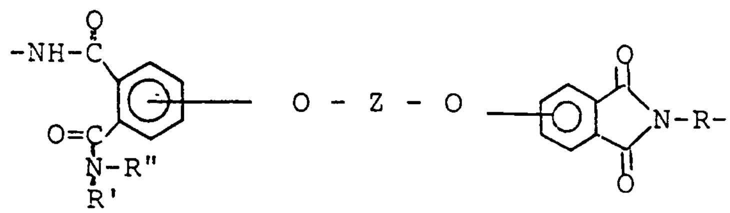

(VII)

and/or units of the formula

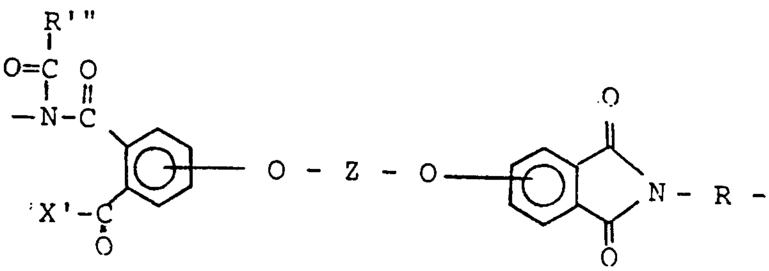

(VIII)

in which Z and R have the meanings given above, R′ is an alkyl, alkenyl, alkoxyalkyl, ketyl, ketenyl, fluoroalkyl or fluoroalkenyl group having at least 4 and preferably from 8 to 18 carbon atoms, or is a phenyl or substituted phenyl groups (for example, phenyl substituted by fluoro or even amino), R″ is hydrogen or together with R′ and the nitrogen forms an alicyclic group, R‴CO is an acyl or fluoroacyl group having at least 4 and preferably from 8 to 18 carbon atoms and X′ is a halogen, preferably chlorine, obtained by reacting a polyetherimide of the formula (III) above with an amine of the general formula R′-NH-R″ or an acyl or fluoroacyl halide of the general formula R‴CO-X′ (for example, perfluorobutanoyl chloride), respectively.

The silicone-polyimide copolymer is suitably one containing groups of the formula

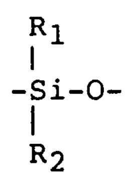

and

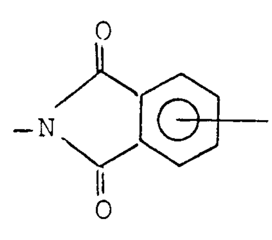

$R_1$ and $R_2$ are organic groups.

Of the amines of the formula R′-NH-R", there are preferred long chain primary amines and fluorinated amines (for example heptafluorobutylamine and pentafluoroaniline).

The reaction between the polyetherimide and the amine is suitably carried out at an elevated temperature and under atmospheric or slightly elevated pressure, for example in a screw mixer at a temperature from 300 to 400 °C, especially about 310 °C.

By grafting on the amine (for example octadecylamine) or acyl group, reactive sites are provided for subsequent crosslinking for example by irradiation. Crosslinking between the side chains can be achieved

(as is the case with polyethylenes) after the addition of a sensitiser, for example triallyl isocyanurate (TAIC) and N,N-metaphenylene dimaleimide (such as that available as HVA-2 from Du Pont), by irradiation.

The blends according to the invention have excellent resistance to environmental stress crazing in halogenated solvents and aviation fuel, and exhibit improved flexibility and flame retardance compared to PEEK alone.

These properties, in conjunction with good abrasion resistance, low toxic fume emission and smoke evolution, little or no halogen content and a wide temperature range of operation enable the use of the blends in high performance electronic and electrical wiring applications such as aircraft, ship and vehicle electrical systems, mass transit systems and high temperature equipment, as a single layer insulation or as the inner and/or outer layer of a double layer insulation.

Blending may be carried out at an elevated temperature for example from 300 to 400 °C, for example in a twin screw mixer. A range of useful blends may be obtained in this manner containing from 5 to 95% by weight PEEK or PEK, from 5 to 95% by weight PEI and up to 80% by weight S-PI, based on the blend. However, when the blend is to be used as a single layer insulation, then the PEEK content of the blend is preferably at least 45% by weight.

As described below in greater detail, blends according to the invention have been tested according to Defence Standard 61-12 (Part 18) Issue 2 and it has been found that blends containing from 45 to 95% by weight PEEK and up to 54% by weight PEI/S-PI comply with that standard. A preferred composition in this respect contains, by weight, 60% PEEK, 5% PEI and 35% S-PI.

Suitable materials for use in the blends of the invention include the PEEK material available from ICI under the trade name "Victrex", the PEK material available from Hoechst Plastics under the trade name "Hostatec" and the PEI and S-PI materials available from General Electric Plastics and General Electric Silicones under the trade names "Ultem" and "Siltem", respectively.

By way of illustration of the invention, a number of PEEK/PEI/S-PI blends were prepared and each was coated onto a tinned copper conductor by extrusion. The resulting wires were tested and found to comply with Defence Standard 61-12 (Part 18) Issue 2, as follows:

TABLE 1

| Critical Oxygen Index (clause 8.2.7) | | | |
|---|---|---|---|
| composition (weight %) | | | oxygen index, % |
| PEEK | PEI | S-PI | Specification limit, 29% |
| 15 | 15 | 70 | 50 |
| 20 | 20 | 60 | 51 |
| 25 | 25 | 50 | 48 |
| 50 | 25 | 25 | 53 |
| 70 | 15 | 15 | 41 |

## TABLE 2

Solvent resistance (Clause 8.2.5)

Each coated wire was tested for resistance to the following solvents

| Solvent | temperature, °C/time |
|---|---|
| ethylene glycol | 50/24 hours |
| trichloroethane | 23/24 hours |
| isopropanol | 23/24 hours |
| phosphate ester-based OX20 | 50/7 days |
| petroleum-based OM18 | 50/7 days |
| isooctane/toluene (70/30) | 23/7 days |
| DERV | 23/7 days |
| synthetic OX38 | 50/7 days |
| deionised water | 50/7 days |
| sea water | 50/7 days |

Each blend was found to have less than 2.0% change in diameter (specification limit ± < 5.0%).

In addition, the abrasion resistance (clause 8.2.12) was found to be about 6,000 (specification limit 500) although the abrasion resistance is capable of significant improvement by optimising extrusion conditions to provide a glossy surface.

In a further test, additional blends of PEEK, Ultem and Siltem were prepared and coated onto tinned copper conductors by extrusion, and then tested for compliance with Defence Standard 61-12 (Part 18) Issue 2. The results obtained are set out in Table 3.

By way of comparison, blends of PEEK and Ultem only and of Ultem and Siltem only were coated onto tinned copper conductors by extrusion and tested for solvent resistance in the same way. The results obtained are set out in Tables 4 and 5.

TABLE 3

| Composition (Weight %) | 45:30:25 | 50:20:30 | 50:25:25 | 60:5:35 | 60:20:20 | 40:30:10 | 70:7.5:22.5 | 70:20:10 | 80:10:10 |
|---|---|---|---|---|---|---|---|---|---|
| Critical Oxygen Index (%) | 53 | 49 | 50 | 45 | 52 | 47 | 51 | 50 | 49 |
| Toxicity Index Test | PASS | PASS | PASS | PASS | PASS | PASS | PASS | PASS | PASS |
| Scrape Abrasion Test | PASS | PASS | PASS | PASS | PASS | PASS | PASS | PASS | PASS |
| Flexure Endurance Test | PASS | PASS | PASS | PASS | PASS | PASS | PASS | PASS | PASS |
| Low Temperature Test | PASS | PASS | PASS | PASS | PASS | PASS | PASS | PASS | PASS |
| Resistance To Fluids Test | | | | | | | | | |
| Ethylene glycol | PASS | PASS | PASS | PASS | PASS | PASS | PASS | PASS | PASS |
| Trichloroethane | PASS | PASS | PASS | PASS | PASS | PASS | PASS | PASS | PASS |
| Isopropanol | PASS | PASS | PASS | PASS | PASS | PASS | PASS | PASS | PASS |
| Phosphate Ester Based OX20 | PASS | PASS | PASS | PASS | PASS | PASS | PASS | PASS | PASS |
| Petroleum Based OM18 | PASS | PASS | PASS | PASS | PASS | PASS | PASS | PASS | PASS |
| 70%/30% Isooctane/Toluene | PASS | PASS | PASS | PASS | PASS | PASS | PASS | PASS | PASS |
| DERV | PASS | PASS | PASS | PASS | PASS | PASS | PASS | PASS | PASS |
| Synthetic OX38 | PASS | PASS | PASS | PASS | PASS | PASS | PASS | PASS | PASS |
| Deionised Water | PASS | PASS | PASS | PASS | PASS | PASS | PASS | PASS | PASS |
| Sea Water | PASS | PASS | PASS | PASS | PASS | PASS | PASS | PASS | PASS |
| Insulation Shrinkage Test | PASS | PASS | PASS | PASS | PASS | PASS | PASS | PASS | PASS |
| Flammability Tests | PASS | PASS | PASS | PASS | PASS | PASS | PASS | PASS | PASS |

TABLE 4

| Composition (by weight) | | | | | | |
|---|---|---|---|---|---|---|
| PEEK:Ultem | 100:5 | 100:20 | 100:50 | 100:100 | 25:100 | 5:100 |
| Ethylene glycol | PASS | PASS | PASS | FAIL | FAIL | FAIL |
| Trichloroethane | PASS | PASS | FAIL | FAIL | FAIL | FAIL |
| Isopropanol | PASS | PASS | FAIL | FAIL | FAIL | FAIL |
| Phosphate Ester Based OX20 | PASS | PASS | PASS | PASS | PASS | PASS |
| Petroleum Based OM18 | PASS | PASS | FAIL | FAIL | FAIL | FAIL |
| 70%/30% Isooctane/Toluene | FAIL | FAIL | FAIL | FAIL | FAIL | FAIL |
| DERV | PASS | PASS | PASS | PASS | PASS | PASS |
| Synthetic OX38 | PASS | PASS | PASS | PASS | PASS | PASS |
| Deionised Water | PASS | PASS | PASS | PASS | PASS | PASS |
| Sea Water | PASS | PASS | PASS | PASS | PASS | PASS |

TABLE 5

| Composition (by weight) | | | | | | | | | | | |
|---|---|---|---|---|---|---|---|---|---|---|---|
| Ultem:Siltem | 2:100 | 5:100 | 10:100 | 25:100 | 50:100 | 100:100 | 100:50 | 100:25 | 100:10 | 100:5 | 100:2 |
| Ethylene glycol | PASS | PASS | FAIL | PASS | PASS | PASS | PASS | PASS | FAIL | FAIL | FAIL |
| Trichloroethane | FAIL | FAIL | FAIL | FAIL | FAIL | FAIL | FAIL | FAIL | FAIL | FAIL | FAIL |
| Isopropanol | PASS | PASS | PASS | PASS | PASS | FAIL | PASS | FAIL | PASS | FAIL | PASS |
| Phosphate Ester Based OX20 | FAIL | FAIL | PASS | PASS | FAIL | PASS | PASS | PASS | PASS | PASS | PASS |
| Petroleum Based OM18 | PASS | PASS | PASS | PASS | PASS | PASS | PASS | PASS | PASS | PASS | PASS |
| 70%/30% Isooctane/Toluene | FAIL | FAIL | FAIL | FAIL | FAIL | FAIL | FAIL | FAIL | FAIL | FAIL | FAIL |
| DERV | PASS | PASS | PASS | PASS | PASS | PASS | PASS | PASS | PASS | PASS | PASS |
| Synthetic OX38 | PASS | PASS | PASS | PASS | PASS | PASS | PASS | PASS | PASS | PASS | PASS |
| Deionised Water | PASS | PASS | PASS | PASS | PASS | PASS | PASS | PASS | PASS | PASS | PASS |
| Sea Water | PASS | PASS | PASS | PASS | PASS | PASS | PASS | PASS | PASS | PASS | PASS |

## Claims

1. A blend comprising a poly(arylene ether ketone) together with a polyetherimide and a silicone-polyimide copolymer.

2. A blend according to claim 1, wherein the poly(arylene ether ketone) contains unit of the general formulae

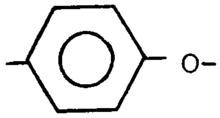 (I) and 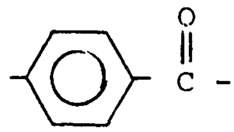 (II)

which may carry one or more substituents on the arylene rings.

3. A blend according to claim 1 or claim 2, wherein the poly(arylene ether ketone) is a polyether ketone, a polyether ether ketone or a polyether ketone ketone.

4. A blend according to claim 3, wherein the polyether ketone contains repeating units of the general formula

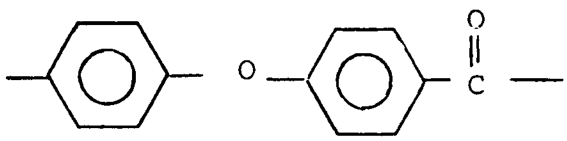 (III)

in which the phenylene groups may carry one or more substituents.

5. A blend according to claim 3, wherein the polyether ether ketone contains repeating units of the general formula

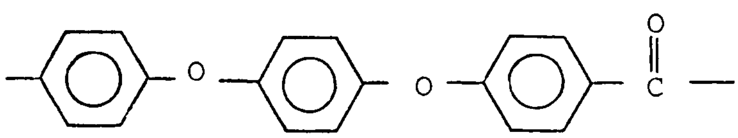 (IV)

in which the phenylene groups may carry one or more substituents.

6. A blend according to claim 3, wherein the polyether ketone ketone contains repeating units of the general formula

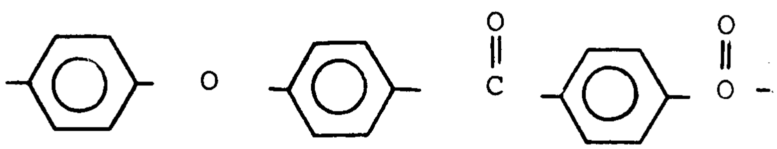 (V)

in which the phenylene groups may carry one or more substituents.

7. A blend according to any one of claims 1 to 6, wherein the polyetherimide contains repeating units of the general formula

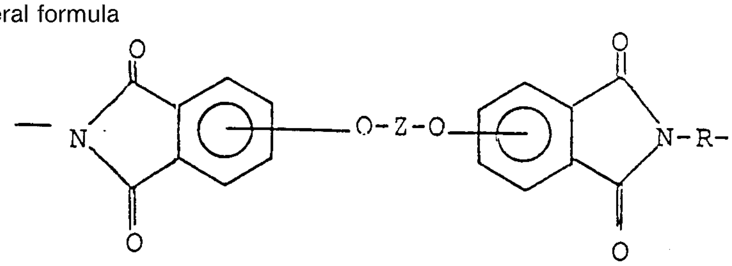 (VI)

in which Z and R are organic groups.

**8.** A blend according to any one of claims 1 to 7, wherein the polyetherimide contains units of the formula

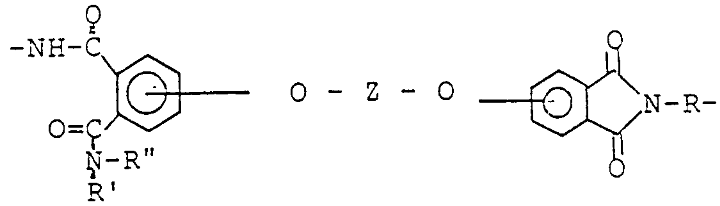

(VII)

in which Z and R are organic groups, R' is an alkyl, alkenyl, alkoxyalkyl, ketyl, ketenyl, fluoroalkyl or fluoroalkenyl group having at least 4 carbon atoms, or is a phenyl or substituted phenyl group, and R'' is hydrogen or together with R' and the nitrogen forms an alicyclic group, obtainable by reacting a polyetherimide as specified in claim 7 with an amine of the formula R'-NH-R''.

**9.** A blend according to any one of claims 1 to 8, wherein the polyetherimide contains units of the formula

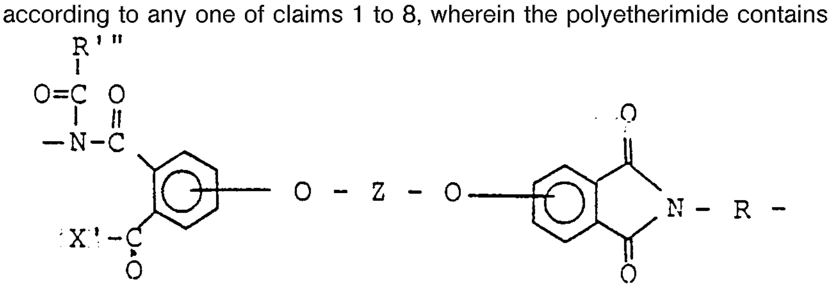

(VIII)

in which Z and R are organic groups, R'''CO is an acyl or fluoroacyl group having at least 4 carbon atoms and X' is a halogen, obtained by reacting a polyetherimide as specified in claim 7 with an acyl or fluoroacyl halide of the formula R'''CO-X'.

**10.** A blend according to any one of claims 7 to 9, wherein Z is

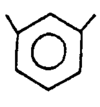 , 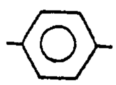 , 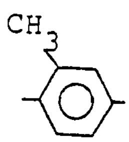 , 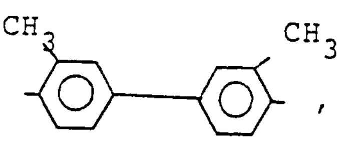 ,

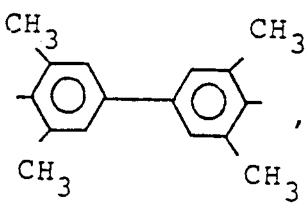 , 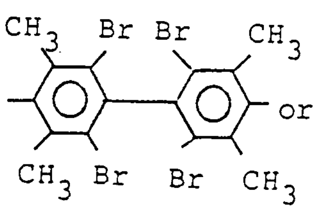 or 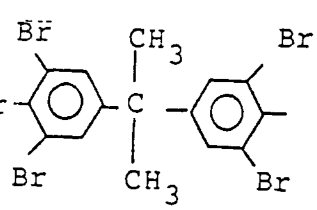

or a group of the formula

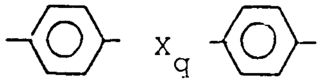

in which X is $C_yH_{2y}$,

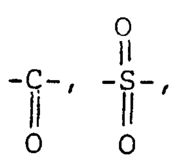

-O- or -S-, q is 0 or 1 and y is an integer from 1 to 5 and the bonds of the -O-Z-O- group are in the 3,3'; 3,4'; 4,3' or the 4,4' position.

**11.** A blend according to any one of claims 7 to 10, wherein R is

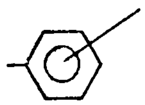 , 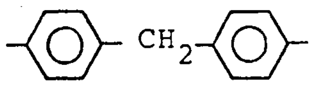 or 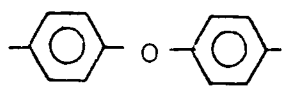

**12.** A blend according to any one of claims 1 to 11, wherein the silicone-polyimide copolymer contains groups of the formula

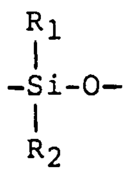 and 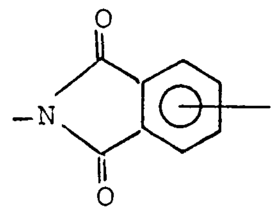

in which $R_1$ and $R_2$ are organic groups.

**13.** A moulded article comprising a blend according to any one of claims 1 to 12.

**14.** A moulded article according to claim 13, in the form of a single layer insulation or as the inner and/or outer layer of a double layer insulation applied to an electrical conductor.

**Patentansprüche**

**1.** Blend, enthaltend ein Poly(arylenetherketon) zusammen mit einem Polyetherimid und einem Silicon/Polyimid-Copolymer.

**2.** Blend nach Anspruch 1, wobei das Poly(arylenetherketon) die Einheit der allgemeinen Formeln

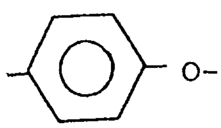 (I) und 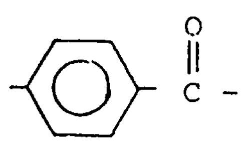 (II)

enthält, die an den Arylenringen einen oder mehrere Substituenten tragen können.

**3.** Blend nach Anspruch 1 oder 2, wobei das Poly(arylenetherketon) ein Polyetherketon, ein Polyetheretherketon oder ein Polyetherketonketon ist.

**4.** Blend nach Anspruch 3, wobei das Polyetherketon Wiederholungseinheiten der allgemeinen Formel

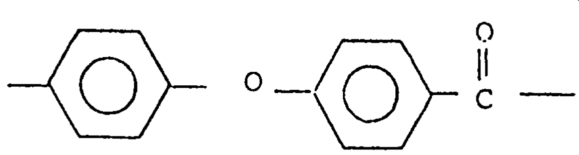 (III)

enthält, in denen die Phenylengruppen einen oder mehrere Substituenten tragen können.

**5.** Blend nach Anspruch 3, wobei das Polyetheretherketon Wiederholungseinheiten der allgemeinen Formel

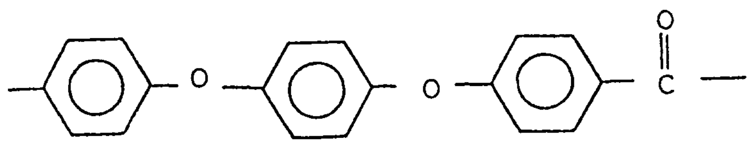

(IV)

enthält, in denen die Phenylengruppen einen oder mehrere Substituenten tragen können.

6. Blend nach Anspruch 3, wobei das Polyetherketonketon Wiederholungseinheiten der allgemeinen Formel

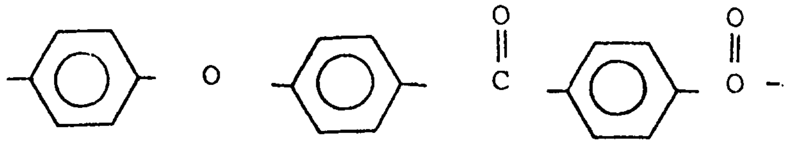

(V)

enthält, bei denen die Phenylengruppen einen oder mehrere Substituenten tragen können.

7. Blend nach einem der Ansprüche 1 bis 6, wobei das Polyetherimid Wiederholungseinheiten der allgemeinen Formel

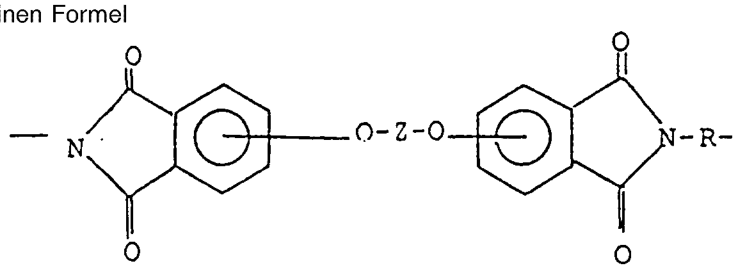

(VI)

enthält, in der Z und R organische Reste bedeuten.

8. Blend nach einem der Ansprüche 1 bis 7, wobei das Polyetherimid Einheiten der Formel

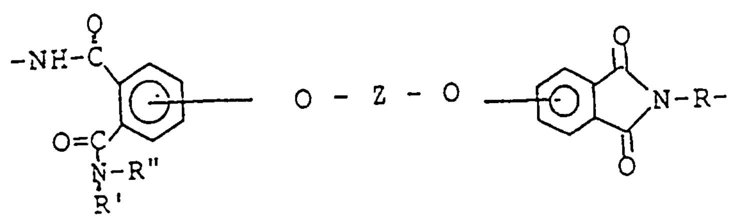

(VII)

enthält, in der Z und R organische Reste, R' einen Alkyl-Alkenyl-, Alkoxyalkyl-, Ketyl-, Ketenyl-, Fluoralkyl- oder Fluoralkenyl-Rest mit mindestens 4 Kohlenstoffatomen oder eine Phenyl- oder substituierte Phenylgruppe bedeutet und in der R'' die Bedeutung von Wasserstoff hat oder zusammen mit R' und den Stickstoffatomen einen alicyclischen Rest bildet, erhältlich durch Umsetzen eines Polyetherimids wie in Anspruch 7 spezifiziert mit einem Amin der Formel R'-NH-R''.

9. Blend nach einem der Ansprüche 1 bis 8, wobei das Polyetherimid Einheiten der Formel

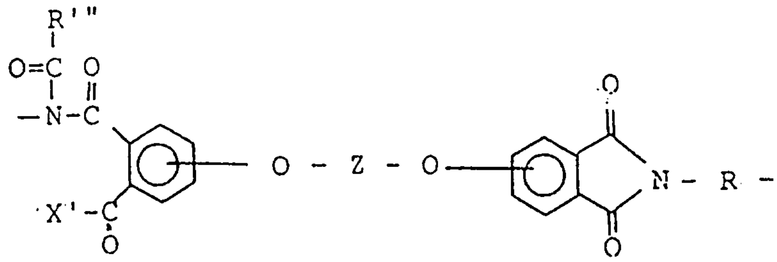 (VIII)

enthält, in der Z und R organische Reste bedeuten, R'' 'CO einen Acyl- oder Fluoracylrest mit mindestens 4 Kohlenstoffatomen und X' ein Halogen bedeuten, erhalten durch Umsetzen eines Polyetherimids wie in Anspruch 7 spezifiziert mit einem Acyl- oder Fluoracylhalogenid der Formel R'' 'CO-X'.

**10.** Blend nach einem der Ansprüche 7 bis 9, wobei Z bedeutet:

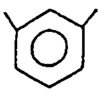 , 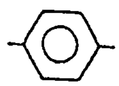 , 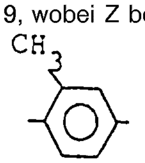 , 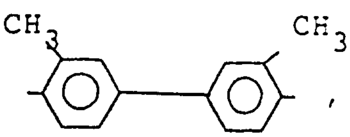 ,

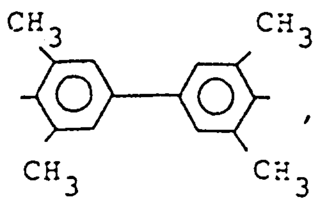 , 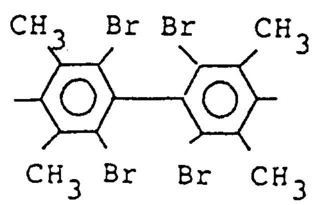 oder 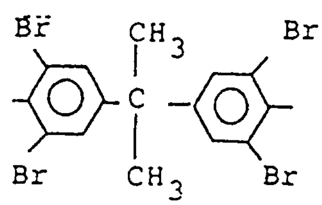

oder einen Rest der Formel

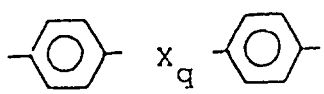

wobei X die Bedeutung $C_yH_{2y}$,

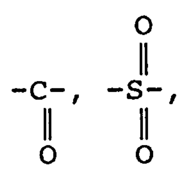

-O- oder -S- hat,
q die Bedeutung 0 oder 1 hat und y eine ganze Zahl von 1 bis 5 bedeutet und sich die Bindungen der -O-Z-O-Gruppe in der 3,3'-; 3,4'-; 4,3'- oder 4,4'-Position befinden.

**11.** Blend nach einem der Ansprüche 7 bis 10, wobei R die Bedeutung hat.

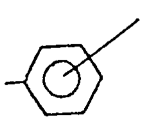 , 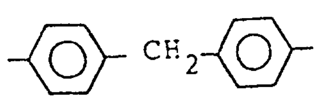 oder 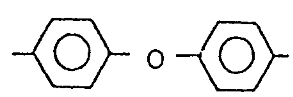

**12.** Blend nach einem der Ansprüche 1 bis 11, wobei das Silicon-Polyimid-Copolymer Reste der Formel

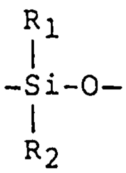

und

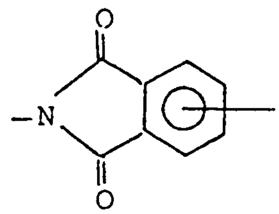

enthält, in denen $R_1$ und $R_2$ organische Reste bedeuten.

**13.** Geformter Gegenstand, enthaltend ein Gemisch gemäß einem der Ansprüche 1 bis 12.

**14.** Geformter Gegenstand nach Anspruch 13 in Form einer Einfachschichtisolierung oder als innere und/oder äußere Schicht einer Doppelschichtisolierung, die für einen elektrischen Leiter angewandt wird.

**Revendications**

**1.** Mélange comprenant une poly(arylèneéthercétone) avec un polyétherimide et un copolymère silicone-polyimide.

**2.** Mélange selon la revendication 1, dans lequel la poly(arylèneéthercétone) contient des unités de formules générales

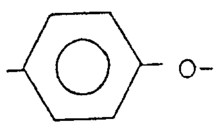 (I) et 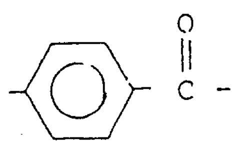 (II)

qui peuvent porter un ou plusieurs substituants sur les cycles arylène.

**3.** Mélange selon la revendication 1 ou la revendication 2, dans lequel la poly(arylèneéthercétone) est une polyéthercétone, une polyétheréthercétone ou une polyéthercétonecétone.

**4.** Mélange selon la revendication 3, dans lequel la polyéthercétone contient des unités constitutives de formule générale

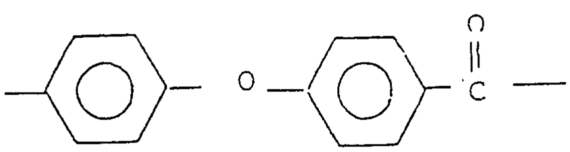 (III)

dans laquelle les groupes phénylène peuvent porter un ou plusieurs substituants.

**5.** Mélange selon la revendication 3, dans lequel la polyétheréthercétone contient des unités constitutives de formule générale

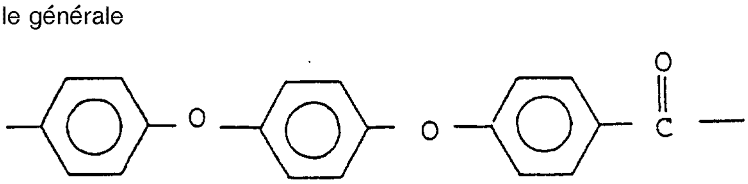 (IV)

dans laquelle les groupes phénylène peuvent porter un ou plusieurs substituants.

6. Mélange selon la revendication 3, dans lequel la polyéthercétonecétone contient des unités constitutives de formule générale

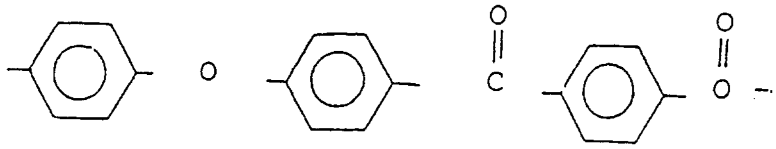

(V)

dans laquelle les groupes phénylène peuvent porter un ou plusieurs substituants.

7. Mélange selon l'une quelconque des revendications 1 à 6, dans lequel le polyétherimide contient des unités constitutives de formule générale

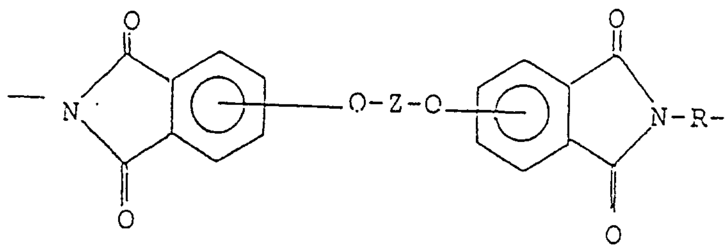

(VI)

dans laquelle Z et R sont des groupes organiques.

8. Mélange selon l'une quelconque des revendications 1 à 7, dans lequel le polyétherimide contient des unités de formule

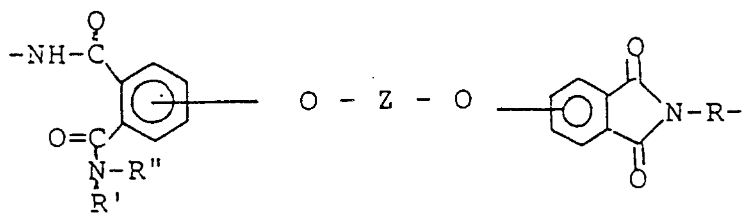

(VII)

dans laquelle Z et R sont des groupes organiques, R' est un groupe alkyle, alcényle, alcoxyalkyle, cétyle, cétényle, fluoroalkyle ou fluoroalcényle ayant au moins 4 atomes de carbone, ou est un groupe phényle ou phényle substitué, et R'' est l'hydrogène ou forme avec R' et l'azote un groupe alicyclique, pouvant être obtenues par réaction d'un polyétherimide tel que spécifié dans la revendication 7 avec une amine de formule R'-NH-R''.

9. Mélange selon l'une quelconque des revendications 1 à 8, dans lequel le polyétherimide contient des unités de formule

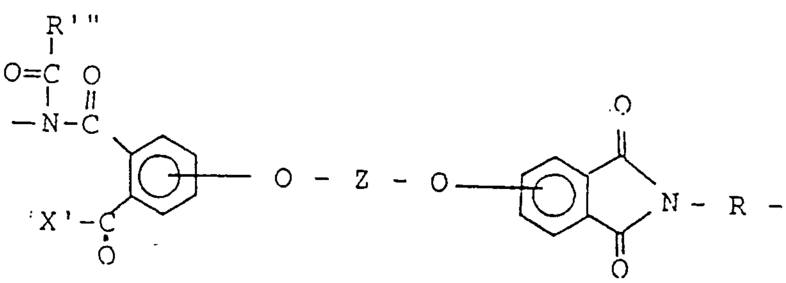

(VIII)

dans laquelle Z et R sont des groupes organiques, R'''CO est un groupe acyle ou fluoroacyle ayant au moins 4 atomes de carbone et X' est un halogène, obtenues par réaction d'un polyétherimide tel que

spécifié dans la revendication 7 avec un halogénure d'acyle ou de fluoroacyle de formule R'''CO-X'.

**10.** Mélange selon l'une quelconque des revendications 7 à 9, dans lequel Z est

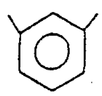 , 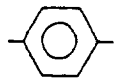 , 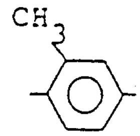 , 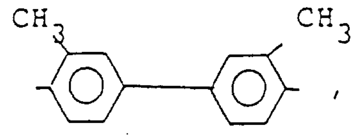 ,

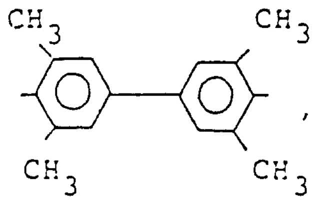 , 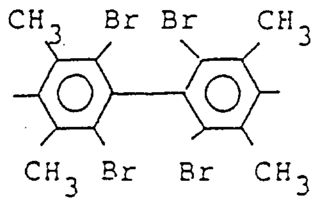 ou 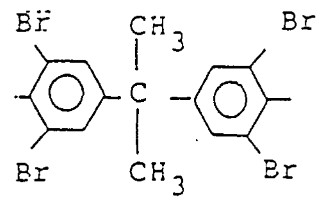

ou un groupe de formule

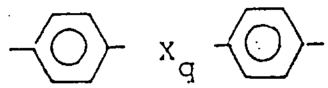

dans laquelle X est $C_yH_{2y}$,

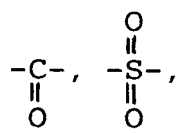

-O- ou -S-,
q est 0 ou 1 et y est un entier de 1 à 5, et les liaisons du groupe -O-Z-O- sont en position 3,3'; 3,4'; 4,3' ou 4,4'.

**11.** Mélange selon l'une quelconque des revendications 7 à 10, dans lequel R est

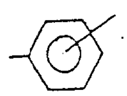 , 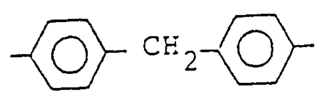 ou 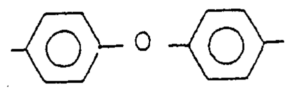

**12.** Mélange selon l'une quelconque des revendications 1 à 11, dans lequel le copolymère silicone-polyimide contient des groupes de formule

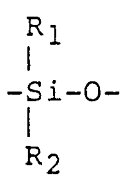 et 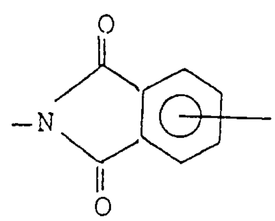

où $R_1$ et $R_2$ sont des groupes organiques.

**13.** Article moulé comprenant un mélange selon l'une quelconque des revendications 1 à 12.

**14.** Article moulé selon la revendidation 13, sous forme d'un isolant en couche simple ou sous forme de la couche interne et/ou externe d'un isolant à deux couches, appliqué sur un conducteur électrique.